# EUROPEAN PATENT SPECIFICATION

(11) **EP 2 980 444 B1**
(45) Date of publication and mention of the grant of the patent: **22.11.2017**
(21) Application number: 14773173.1
(22) Date of filing: 03.03.2014
(51) Int. Cl.: F16F 15/08, B60K 5/12, F16F 1/38

(54) **TORQUE ROD**
DREHMOMENTSTANGE
BIELLE DE POUSSÉE

(30) Priority: 28.03.2013 JP 2013069208
(43) Date of publication of application: 03.02.2016
(73) Proprietor: Bridgestone Corporation, Tokyo 104-8340 (JP)
(72) Inventor: SUGAWARA, Hideki, Tokyo 104-8340 (JP)
(74) Representative: Oxley, Robin John George
(86) International application number: PCT/JP2014/055339
(87) International publication number: WO 2014/156495

(56) References cited:
- JP-A- H04 351 335
- JP-A- 2006 118 521
- JP-A- 2009 243 483
- JP-A- 2009 243 483
- JP-A- 2011 011 475
- JP-A- 2012 189 142
- JP-U- H04 109 236

## Description

### Technical Field

The present invention relates to a torque rod.

### Background Art

As a torque rod coupling together an engine (vibration generating section) and a vehicle body (vibration receiving section), Japanese Patent Application Laid-Open (JP-A) No. 2005-273699 describes a torque rod including a rod body with one end portion attached to the engine, and another end portion attached to the vehicle body, an outer tube that is inserted into an attachment hole formed at one end portion of the rod body, an inner tube provided at a circumferential inside of the outer tube, and an elastic body that couples the outer tube and the inner tube together.

JP 2009-243483 discloses a light weight resin torque rod and JP 2012-189142 discloses a vibration-isolating connecting rod which facilitates adjustment of a spring constant.

### SUMMARY OF INVENTION

### Technical Problem

However, there is a concern of the outer tube shifting in the hole axial direction of the attachment hole and detaching, together with the inner tube, from the rod body and the elastic body when the outer tube is repeatedly input with axial direction force from the engine.

In consideration of the above circumstances, an object of the present invention is to suppress detachment of an inner tube and an elastic body from a rod body.

### Solution to Problem

A torque rod according to a first exemplary embodiment of the present invention includes: a rod body having one end portion that is attached to a side of a vibration receiving section, and having another end portion that is attached to a side of a vibration generating section; an inner tube coupled to the vibration generating section; an elastic body that is provided at an outer circumferential face of the inner tube, and that is inserted into an attachment hole formed in the other end portion of the rod body; a stopper portion that is formed at an opening on one end side of the attachment hole in the hole axial direction, and that prevents detachment of the elastic body from the attachment hole; and an anti-detachment member that is attached to the rod body from another end side of the attachment hole in the hole axial direction, and that prevents detachment of the elastic body from the attachment hole, wherein the elastic body is press-fitted into the attachment hole; and the anti-detachment member is a ring shaped plate that is press-fitted into the attachment hole; and after press-fitting the plate, a notch is formed at the surface of the plate so as to spread out the plate in the radial direction and plastically deform the plate.

### Advantageous Effects of Invention

The present invention configured a described above enables detachment of the inner tube and the elastic body from the rod body to be suppressed.

### BRIEF DESCRIPTION OF DRAWINGS

Fig. 1 is a perspective view illustrating a state in which a torque rod according to a first exemplary embodiment of the present invention is disposed between an engine and a vehicle body.
Fig. 2 is an exploded perspective view illustrating a configuration of a torque rod according to the first exemplary embodiment of the present invention.
Fig. 3 is a cross-section taken along a radial direction, illustrating a torque rod according to the first exemplary embodiment of the present invention.
Fig. 4 is a cross-section taken along a radial direction, illustrating a state immediately prior to a notch-forming jig pressing against a plate of a torque rod.
Fig. 5 is an enlarged cross-section of relevant portions taken along a radial direction, illustrating a notch formed in a plate.
Fig. 6 is a cross-section taken along a radial direction, illustrating a state in which an outer tube is press-fitted into a rod body of a torque rod.
Fig. 7 is a cross-section taken along a radial direction, illustrating a torque rod.
Fig. 8 is a cross-section taken along a radial direction, illustrating a torque rod.

### DESCRIPTION OF EMBODIMENTS

### First Exemplary Embodiment

### Configuration

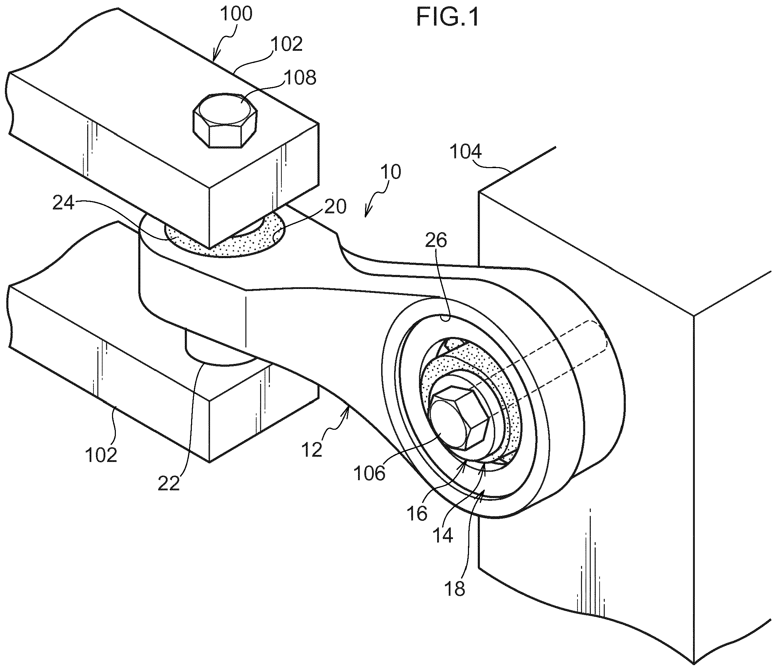

Explanation follows regarding a torque rod 10 according to an exemplary embodiment of the present invention, with reference to the drawings. As illustrated in Fig. 1, the torque rod 10 of the present exemplary embodiment is a rod shaped member provided between an engine 104, serving as a vibration generating section, and a vehicle body 100, serving as a vibration receiving section. One end portion of the torque rod 10 is coupled to the vehicle body 100 by attaching between a pair of upper and lower brackets 102 provided to the vehicle body 100. The other end portion of the torque rod 10 is fastened to the engine 104 using a bolt 106.

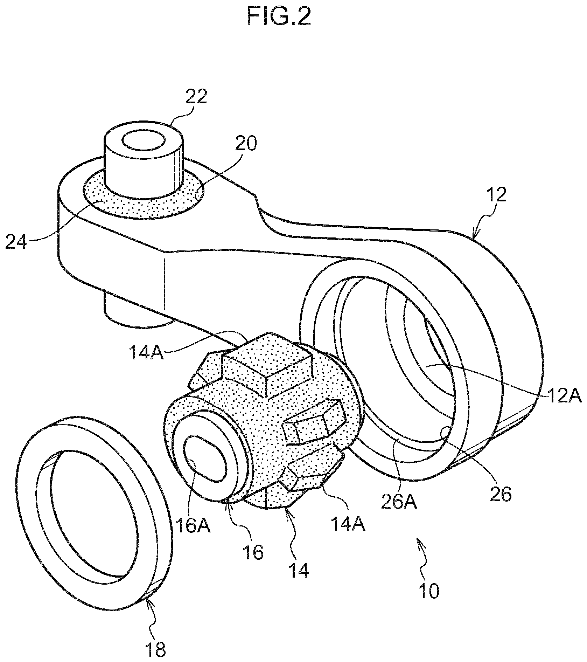

As illustrated in Fig. 2, the torque rod 10 is principally configured including a rod body 12, an elastic body 14, an inner tube 16, and a plate 18 serving as an anti-detachment member. The rod body 12 is a rod shaped member made of metal. An attachment hole 20 is formed to one end portion on the vehicle body 100 side of the rod body 12.

The attachment hole 20 penetrates the rod body 12 in the up-down direction in the drawings, and an inner tube 22, open at both end portions, is inserted through the attachment hole 20. Both axial direction end portions of the inner tube 22 project out from the rod body 12, and an elastic body 24 is adhered by vulcanization between an outer circumferential face of the inner tube 22 and a hole wall of the attachment hole 20. The elastic body 24 is formed from a member with elastic properties, such as an elastomer, and is coupled to the inner tube 22 and the rod body 12 so as to be capable of elastically deforming. A bolt 108 is inserted through the inner tube 22, and fastened to the vehicle body 100 (see Fig. 1).

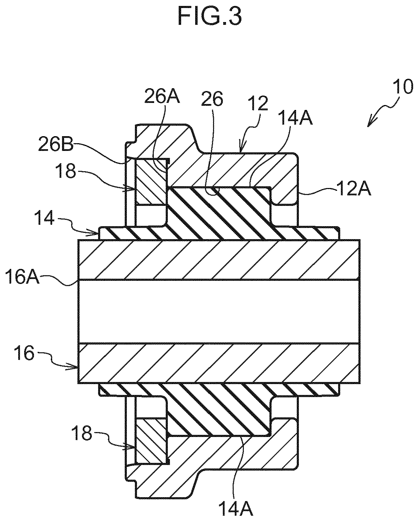

The rod body 12 is formed with gradually increasing thickness in the up-down direction on progression from the one end portion formed with the attachment hole 20 toward the other end portion. An attachment hole 26 is formed at the other end portion of the rod body 12. The attachment hole 26 has a center axis that is orthogonal to the center axis of the attachment hole 20 formed at the one end portion of the rod body 12, and is formed with a larger diameter than the attachment hole 20. An opening portion on one end side (the engine 104 side) in the axial direction of the attachment hole 26 is formed with a flange 12A that extends from an edge of the attachment hole 26 opening toward the radial direction inside (see Fig. 3). The flange 12A is formed around the entire circumference of the attachment hole 26; however there is no limitation thereto, and the flange 12A may be formed intermittently around the circumference of the attachment hole 26, or only to part thereof.

The hole wall on the other end side in the axial direction of the attachment hole 26 (the opposite side to the engine 104) is formed with a stepped portion 26A. The stepped portion 26A is formed such that the other end portion of the attachment hole 26 has a larger diameter than the flange 12A side. As illustrated in Fig. 3, the elastic body 14 that is adhered by vulcanization to an outer circumferential face of the inner tube 16 is press-fitted into a small diameter portion further to the flange 12A side than the stepped portion 26A. An opening 26B on the other end side in the axial direction of the attachment hole 26 is formed with a tapered profile such that the internal diameter increases on progression from the one end side toward the other end side in the axial direction, thereby facilitating press-fitting of the plate 18, described later.

The elastic body 14 that is press-fitted into the attachment hole 26 is formed from a member with elastic properties, such as an elastomer. Plural protrusions 14A are formed to an outer circumferential face of the elastic body 14. Six of the protrusions 14A are formed at intervals around the circumferential direction of the elastic body 14, and the respective protrusions 14A extend along the axial direction on the outer circumferential face of the elastic body 14. An external diameter dimension of the elastic body 14, including the protrusions 14A, is formed slightly larger than the hole diameter of the small diameter portion of the attachment hole 26. Note that the number and shape of the protrusions 14A are not limited in the present exemplary embodiment, and other shapes may be employed. For example, the protrusions 14A may be ring shaped protrusions connected together around the circumferential direction.

The inner tube 16 is a cylindrical shaped metal member opening at both end portions, and has an outer circumferential face covered by the elastic body 14 except for at both end portions. An opening 16A of the inner tube 16 is formed with an elongated hole profile, and the bolt 106 is inserted through the opening 16A to fasten the rod body 12 and the engine 104 together (see Fig. 1).

After press-fitting the elastic body 14 into the attachment hole 26, the plate 18 is press-fitted into the attachment hole 26 from the axial direction other end side (the opposite side to the engine 104). The plate 18 is a thin, circular ring shaped metal member, and although the plate 18 is made from a metal with high ductility, such as iron, copper, or aluminum in the present exemplary embodiment, there is no limitation thereto, and the plate 18 may be formed from a metal with low ductility. The external diameter of the plate 18 is slightly larger than the hole diameter of the stepped portion 26A at the other end side of the attachment hole 26, and the plate 18 is press-fitted into the attachment hole 26 by applying pressure in the axial direction.

As illustrated in Fig. 3, the plate 18 contacts the stepped portion 26A of the attachment hole 26, and in the present exemplary embodiment, the protrusions 14A of the elastic body 14 are in a clamped state between the flange 12A and the plate 18. Note that there is no limitation thereto, and the axial direction length of the protrusions 14A may be formed shorter, so as to contact only one out of the flange 12A or the plate 18. Moreover, configuration may be made such that the protrusions 14A contact neither the flange 12A nor the plate 18.

In the present exemplary embodiment, the opening 16A of the inner tube 16 is configured with an elongated hole profile, thereby enabling dimensional errors arising between the torque rod 10 and the engine 104 or the vehicle body 100 to which it is coupled to be accommodated. However, there is no limitation thereto, and the opening of the inner tube 16 may be circular. In the present exemplary embodiment, the elastic body 24 on the vehicle body 100 side is adhered between the attachment hole 20 and the inner tube 22 by vulcanization; however there is no limitation thereto, and the elastic body 24 on the vehicle body 100 side may be press-fitted into the attachment hole 20 similarly to the elastic body 14 on the engine 104 side. In such cases, a member to prevent detachment of the elastic body 24 may be attached separately.

In the present exemplary embodiment, the elastic body 14 is adhered by vulcanization to the outer circumferential face of the inner tube 16; however there is no limitation thereto, and the elastic body 14 may be adhered using a different method. For example, elastic body 14 may be adhered by coating the outer circumferential face of the inner tube 16 with an adhesive.

### Operation

Next, explanation follows regarding operation of the torque rod 10 of the present exemplary embodiment. As illustrated in Fig. 1, when the engine 104 of the vehicle to which the torque rod 10 is attached is started up, the engine 104 vibrates, and the vibration is input to the inner tube 16 through the bolt 106. Since the rod body 12 and the inner tube 16 are capable of moving relative to each other through the elastic body 14, the inner tube 16 vibrates when this occurs, causing the elastic body 14 to elastically deform, and thereby attenuating and absorbing the vibration. This thereby enables vibration input from the engine 104 to be suppressed from being transmitted to the vehicle body 100.

Next, when force in the axial direction of the inner tube 16 is input from the engine 104 or the vehicle body 100, although the inner tube 16 undergoes relative displacement in the axial direction with respect to the rod body 12, the inner tube 16 returns to its original position due to the recovery force of the elastic body 14.

Note that when excessive axial direction force is applied to the inner tube 16, as illustrated in Fig. 3, shear force acts between the protrusions 14A of the elastic body 14 and an inner wall of the attachment hole 26, and the elastic body 14 attempts to shift in the axial direction with respect to the rod body 12. When this occurs, supposing, for example, that the elastic body 14 attempts to shift toward the engine 104 side, the flange 12A that is in contact with the protrusions 14A of the elastic body 14 suppresses the elastic body 14 from shifting in the axial direction. Supposing the elastic body 14 attempts to shift toward the opposite side to the engine 104, the plate 18 that is in contact with the protrusions 14A of the elastic body 14 suppresses the elastic body 14 from shifting in the axial direction. The elastic body 14 can accordingly be prevented from detaching from the rod body 12, even with repeated input of axial direction force from the engine 104 or the vehicle body 100.

The flange 12A is integrally formed to the rod body 12, thereby enabling a reduction in the number of components in comparison to cases in which the flange 12A and the rod body 12 are formed as separate bodies. Noise occurring due to impact between the flange 12A and the rod body 12 can also be suppressed. The elastic body 14 is press-fitted directly into the attachment hole 26, without any other members interposed between the elastic body 14 and the attachment hole 26, thereby enabling noise generated by components impacting each other to be suppressed.

Next, explanation follows regarding a torque rod 30 as part of the first exemplary embodiment of the present invention. In the torque rod 30, the plate 18 formed from a metal with high ductility is press-fitted into the attachment hole 26 of the rod body 12

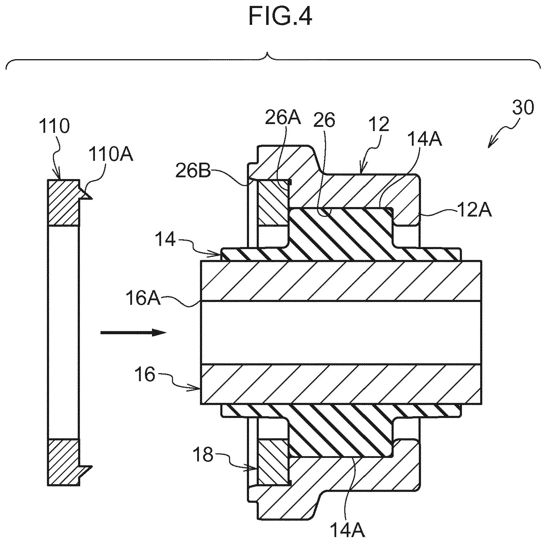

Note that as illustrated by the arrow in Fig. 4, a ring shaped notch-forming jig 110 is pressed against the plate 18 in the axial direction after press-fitting the plate 18 into the attachment hole 26. The notch-forming jig 110 is a ring shaped metal member formed with substantially the same external diameter as the plate 18, and is formed from a harder metal than the plate 18.

One face of the notch-forming jig 110 is provided with a notching blade 110A configured with an acutely angled leading end. As an example in the present exemplary embodiment, the notching blade 110A is formed all the way around the circumference of the notch-forming jig 110; however there is no limitation thereto, and the notching blades 110A may be formed intermittently around the circumference, or only to part thereof. A radial direction outside face of the notching blade 110A has a tapered shape such that the width is narrower on progression from the base to toward the leading end, and a radial direction inside face of the notching blade 110A is formed straight along the axial direction.

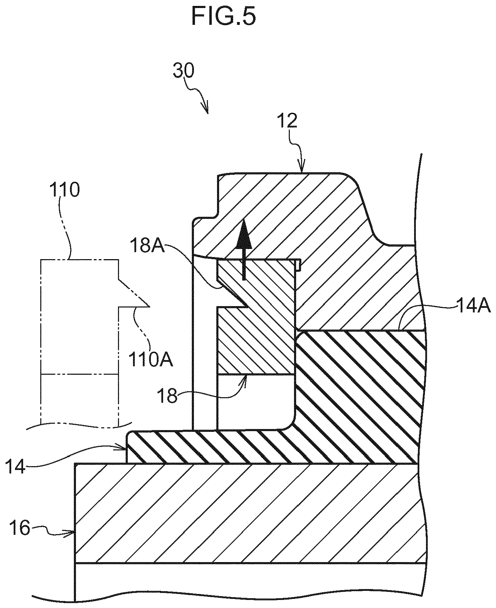

As illustrated in Fig. 5, a notch 18A is formed in the surface of the plate 18 when the notch-forming jig 110 is pressed against the plate 18. Since the radial direction outside face of the notching blade 110A has a tapered shape, the plate 18 undergoes plastic deformation so as to spread out toward the radial direction outside as the notch-forming jig 110 is pushed into the plate 18.

In the torque rod 30, the attachment hole 26 is squeezed by the plate 18 due to the plate 18 spreading out toward the radial direction outside. The anti-detachment force in the axial direction of the plate 18 is accordingly increased, enabling detachment of the elastic body 14 to be reliably prevented even when axial direction force acts on the plate 18 from the protrusions 14A of the elastic body 14.

Note that the notch-forming jig 110 is formed in a ring shape conforming to the plate 18; however there is no limitation thereto, and the shape of the jig is not specified as long as it is a jig capable of forming the notch 18A. For example, the jig may be rod shaped with a pointed leading end.

### Another Example:

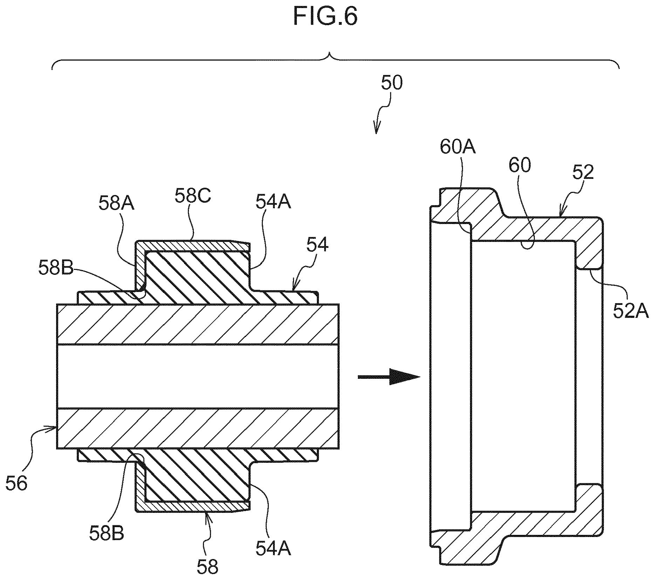

Next, explanation follows regarding a torque rod 50 according to a second exemplary embodiment of the present invention. As illustrated in Fig. 6, an elastic body 54 configuring the torque rod 50 of the present exemplary embodiment is press-fitted into an outer tube 58 serving as an anti-detachment member.

The outer tube 58 is a metal circular cylinder body with a bottom. An insertion hole 58B is formed in a bottom portion 58A formed on one end side in the axial direction of the outer tube 58. An inner tube 56 that is covered by the elastic body 54 is inserted through the insertion hole 58B. The internal diameter of the outer tube 58 is formed slightly smaller than the external diameter of the elastic body 54. The elastic body 54 is accordingly push-fitted through an opening at the other end side in the axial direction of the outer tube 58 using a specific pressure, and protrusions 54A formed on an outer circumferential face of the elastic body 54 make tight contact with the bottom portion 58A and an inner circumferential face of a side wall 58C of the outer tube 58.

In the present exemplary embodiment, the axial direction length of the side wall 58C of the outer tube 58 and the axial direction length of the protrusions 54A of the elastic body 54 are formed substantially the same length as each other; however there is no limitation thereto, and, for example, the axial direction length of the side wall 58C may be formed longer than the axial direction length of the protrusions 54A of the elastic body.

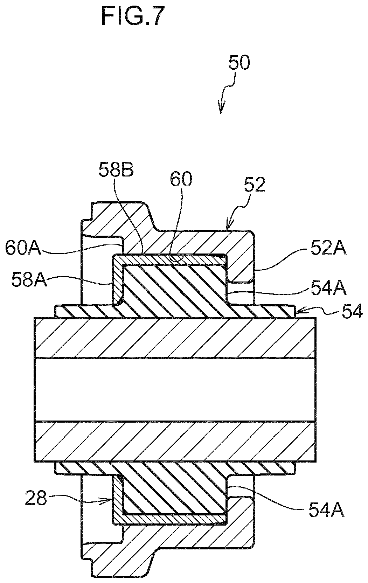

The outer tube 58 into which the elastic body 54 is press-fitted is press-fitted toward an attachment hole 60 of a rod body 52, in the direction of the arrow in the drawings. Accordingly, as illustrated in Fig. 7, the other end portion of the outer tube 58 contacts a flange 52A extending out from the opening edge of the attachment hole 60 of the rod body 52 toward the radial direction inside, and the protrusions 54A of the elastic body 54 are clamped between the bottom portion 58A of the outer tube 58 and the flange 52A. An outer circumferential face of the side wall 58C of the outer tube 58 makes tight contact with the hole wall of the attachment hole 60.

In the torque rod 50 of the present exemplary embodiment, detachment of the elastic body 54 can be prevented by the flange 52A and the outer tube 58, even when axial direction force is input to the inner tube 56. The degree to which press-fitting occurs with respect to the rod body 52 can be adjusted by modifying the axial direction length of the side wall 58C of the outer tube 58. Namely, the contact surface area between the hole wall of the attachment hole 60 of the rod body 52 and the outer tube 58 is reduced by shortening the axial direction length of the side wall 58C, thereby enabling a reduction the pressure required to press-fit the outer tube 58 into the attachment hole 60. The anti-detachment force with respect to axial direction force of the outer tube 58 can be increased by restoring the axial direction length of the side wall 58C to its original length to increase the contact surface area between the hole wall of the attachment hole 60 and the outer tube 58.

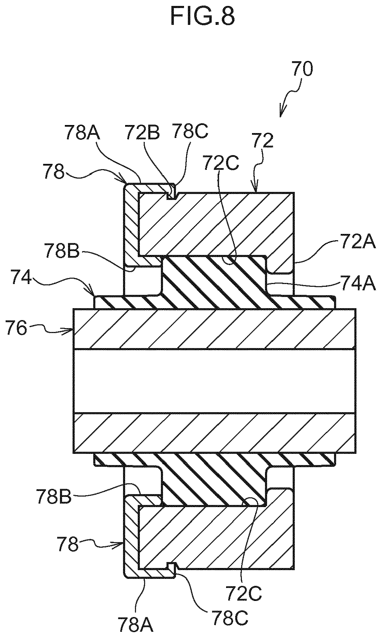

Next, explanation follows regarding a torque rod 70, which does not form part of the claimed invention. As illustrated in Fig. 8, the torque rod 70 includes a rod body 72 that has an external diameter with the same profile as the torque rod 10 of the first exemplary embodiment, and that is formed with a circumferential groove 72B at an outer circumferential face of the rod body 72.

An attachment hole 72C of the rod body 72 is formed with a straight profile without a step. An elastic body 74 is press-fitted into the attachment hole 72C. Protrusions 74A formed to an outer circumferential face of the elastic body 74 are in tight contact with a flange 72A formed on one end side in the axial direction of the rod body 72, and with a hole wall of the attachment hole 72C. An inner tube 76 with an outer circumferential face covered by the elastic body 74 is inserted through the attachment hole 72C.

A clasp 78, serving as an anti-detachment member, is attached to the other end side in the axial direction of the rod body 72. The clasp 78 is a ring shaped resin member, and is attached around the circumference of the attachment hole 72C. The clasp 78 is formed with an outside rib 78A that extends from an outer circumferential edge along the axial direction, and an inside rib 78B extending from an inner circumferential edge along the axial direction, similarly to the outside rib 78A.

A locking claw 78C is formed by bending a leading end portion of the outside rib 78A toward the radial direction inside. The locking claw 78C enters the circumferential groove 72B in an attached state of the clasp 78 to the rod body 72. Accordingly, the clasp 78 cannot be removed from the rod body 72. A leading end portion of the inside rib 78B contacts the protrusions 74A of the elastic body 74, clamping the protrusions 74A of the elastic body 74 between the flange 72A and the inside rib 78B.

In the torque rod 70, detachment of the elastic body 74 can be prevented by the flange 72A and the clasp 78, even when axial direction force is input to the inner tube 76. The clasp 78 can be suppressed from being removed even when axial direction force is transmitted from the protrusions 74A of the elastic body 74 to the inside rib 78B of the clasp 78 due to the locking claw 78C entering the circumferential groove 72B.

The resin clasp 78 is employed, and the clasp 78 can be easily attached to the rod body 72 by flexing the clasp 78. However, there is no limitation thereto, and the clasp 78 may be formed from a metal material with flexible properties.

Explanation has been given regarding the first exemplary embodiment of the present invention. However, the present invention is not limited to such exemplary embodiments, and obviously various configurations may be implemented within a range not departing from the spirit of the present invention, which is defined by the claims. For example, in the rod body 12 illustrated in Fig. 1, the center axis of the attachment hole 26 is orthogonal to the center axis of the attachment hole 20; however there is no limitation thereto, and the attachment hole 26 and the attachment hole 20 may be formed so as to open in the same direction of the rod body 12, with center axes running parallel to each other.

## Claims

1. A torque rod (10), comprising:
a rod body (12) having one end portion that is attached to a side of a vibration receiving section, and having another end portion that is attached to a side of a vibration generating section (104);
an inner tube (16) coupled to the vibration generating section (104);
an elastic body (14) that is provided at an outer circumferential face of the inner tube (16), and that is inserted into an attachment hole (26) formed in the other end portion of the rod body (12);
a stopper portion that is formed at an opening on one end side of the attachment hole (26) in the hole axial direction, and that prevents detachment of the elastic body (14) from the attachment hole (26); and
an anti-detachment member that is attached to the rod body (12) from another end side of the attachment hole (26) in the hole axial direction, and that prevents detachment of the elastic body (14) from the attachment hole (26), wherein
the elastic body (14) is press-fitted into the attachment hole (26); and
the anti-detachment member is a ring shaped plate (18) that is press-fitted into the attachment hole (26); and
after press-fitting the plate (18), a notch (18A) is formed at the surface of the plate (18) so as to spread out the plate (18) in the radial direction and plastically deform the plate (18).

2. The torque rod (10) of claim 1, wherein the stopper portion is a flange (12A) that extends out from an opening edge of the attachment hole (26) toward an inner side in a radial direction of the attachment hole (26).

3. The torque rod (10) of claim 2, wherein the flange (12A) is formed at an opening edge on the vibration generating section (104) side of the attachment hole (26).

## Patentansprüche

1. Drehmomentstange (10), umfassend:
einen Stangenkörper (12), welcher einen Endabschnitt, welcher an einer Seite eines Vibrationsempfangsbereichs befestigt ist, und einen anderen Endabschnitt aufweist, welcher an einer Seite eines Vibrationserzeugungsbereichs (104) befestigt ist;
ein inneres Rohr (16), welches mit dem Vibrationserzeugungsbereich (104) gekoppelt ist;
einen elastischen Körper (14), welcher auf einer äußeren Umfangsfläche des inneren Rohrs (16) angeordnet ist, und welcher in einem Befestigungsloch (26) eingesetzt ist, welches im anderen Endabschnitt des Stangenkörpers (12) gebildet ist;
einen Anschlagabschnitt, welcher an einer Öffnung auf einer Endseite des Befestigungslochs (26) in der Axialrichtung des Lochs geformt ist, und welcher ein Lösen des elastischen Körpers (14) vom Befestigungsloch (26) verhindert; und
ein Sicherungsglied, welches an den Stangenkörper (12) von einer anderen Endseite des Befestigungslochs (26) in der Axialrichtung des Lochs befestigt ist, und welches das Lösen des elastischen Körpers (14) vom Befestigungsloch (26) verhindert, wobei
der elastische Körper (14) in das Befestigungsloch (26) presseingepasst ist; und
wobei das Sicherungsglied eine ringförmige Platte (18) ist, welche in das Befestigungsloch (26) presseingepasst ist; und
nach dem Presseinpassen der Platte (18), eine Kerbe (18A) auf der Oberfläche der Platte (18) gebildet wird, damit die Platte (18) in der Radialrichtung ausgebreitet und die Platte (18) plastisch verformt wird.

2. Drehmomentstange (10) nach Anspruch 1, wobei der Anschlagabschnitt ein Flansch (12A) ist, welcher sich von einem Öffnungsrand des Befestigungslochs (26) zu einer inneren Seite in einer Radialrichtung des Befestigungslochs (26) hin erstreckt.

3. Drehmomentstange (10) nach Anspruch 2, wobei der Flansch (12A) an einem Öffnungsrand auf der Seite des Vibrationserzeugungsbereichs (104) des Befestigungslochs (26) geformt ist.

## Revendications

1. Bielle de poussée (10), comprenant :
un corps de bielle (12) comportant une partie d'extrémité fixée sur un côté d'une section de réception des vibrations, et comportant une autre partie d'extrémité fixée sur un côté d'une section de génération des vibrations (104) ;
un tube interne (16) accouplé à la section de génération des vibrations (104) ;
un corps élastique (14) agencé au niveau d'une face circonférentielle externe du tube interne (16) et inséré dans un trou de fixation (26) formé dans l'autre partie d'extrémité du corps de la bielle (12) ;
une partie d'arrêt formée au niveau d'une ouverture sur un côté d'extrémité du trou de fixation (26), dans une direction axiale du trou, et empêchant le détachement du corps élastique (14) du trou de fixation (26) ; et
un élément anti-détachement fixé sur le corps de la bielle (12) à partir d'un autre côté d'extrémité du trou de fixation (26), dans la direction axiale du trou, et empêchant le détachement du corps élastique (14) du trou de fixation (26) ; dans laquelle
le corps élastique (14) est ajusté par pression dans le trou de fixation (26) ; et
l'élément anti-détachement est une plaque de forme annulaire (18) ajustée par pression dans le trou de fixation (26) ; et
après l'ajustement par pression de la plaque (18), une encoche (18A) est formée au niveau de la surface de la plaque (18) de sorte à étendre la plaque (18) dans la direction radiale et à entraîner une déformation plastique de la plaque (18).

2. Bielle de poussée (10) selon la revendication 1, dans laquelle la partie d'arrêt est une bride (12A) s'étendant d'un bord d'ouverture du trou de fixation (26) vers un côté interne dans une direction radiale du trou de fixation (26).

3. Bielle de poussée (10) selon la revendication 2, dans laquelle la bride (12A) est formée au niveau d'un bord d'ouverture sur le côté de la section de génération des vibrations (104) du trou de fixation (26).
